# EUROPEAN PATENT APPLICATION

(11) **EP 0 971 487 A1**
(43) Date of publication of application: **12.01.2000**
(21) Application number: 98401666.7
(22) Date of filing: 02.07.1998
(51) Int. Cl.: H04B 7/185, H04Q 11/04

(54) **Method and arrangement for exchanging control information between earth stations of a satellite communication network**

(71) Applicant: ALCATEL, 75008 Paris (FR)
(72) Inventor: Willemen, Jan, 9850 Landegem (BE); Leroy, Jean-Marie, 2970 Schilde (BE); Saidi, Abdelkrime, 1020 Brussel (BE)
(74) Representative: Narmon, Gisèle Marie Thérèse

(57) **Abstract**

Transmission of control information between two earth stations (1, 2) communicating by means of a satellite link (SL) is at least partly insured by means of a link (TL) of a land-based communication network associated to the satellite network.

The arrangement is such that at least in an earth station (1) there is a station controller (10) programmed for transmitting control information related to the co-ordinated use of a satellite link (SL) to at least one other earth station (2) by means of a satellite link (SL) or by means of a land-based link (TL). In the station (1), such a station controller (10) is linked to a satellite interface (11) by means of a first transceiving equipment (12) and to a land communication interface (13) connected to the land based link (TL) by means of another transceiving equipment (14).

## Description

The invention relates to a method and to an arrangement for exchanging control information between earth stations of a satellite communication network linked with a land-based communication network in a communication system.

Communication systems based on a synergetic combination of communication networks individually involving transmission means which are different are well known, wired transmission means being used for instance in a first network and radio transmission means being used in a second network of a same hybrid communication system.

Wireless telephone networks capable of servicing roaming radiotelephone users are often combined with wired telephone networks capable of servicing telephone users and wireless telephone networks, including orbiting satellites for transmission of information, are known.

Transmission of information data in such communication systems including a satellite communication network and a land-based communication network is shared between the two according to their specific capabilities and to the transmission needs. Some of them imply earth stations. As already known, the traffic of information transmitted by an earth station to an orbiting satellite may belong to more than one connection and there is often simultaneous transmission of speech and data for a same connection. Accordingly, traffic requirements can vary widely between different earth stations, individual connections and over time.

As known in the art, control information data or more precisely status and control information data are associated to user information data for transmission purposes.

Status and control information comprises medium access control information exchanged between earth stations linked by means of a shared radio link involving an orbiting satellite, such medium access control information being required for the co-ordination of the common use of the satellite radio link. Simultaneous use of a same satellite radio link by more earth stations requires a co-ordination which is often centralised at the level of a central controller or distributed among geographically disseminated control units. In any case the co-ordination method implies exchanges of status and control information between all the involved entities and more specifically between the involved earth stations.

In conventional systems, status and control information data are transmitted with the user information data between earth stations over the satellite radio link that these stations share. The use of a satellite radio link for such transmissions induces a significant delay between data transmission from an earth station and receipt at the level of another earth station, with for instance a minimum delay of 250 ms when the satellite network corresponds to a known geostationary constellation. Such delays bring about a limitation of the ability of a satellite communication network to satisfy the individual requirements particularly in terms of delay, bandwidth and information loss rate for individual connections.

The object of this invention, therefore, is to provide a method and an arrangement for exchanging control data between earth stations of a satellite network in a communication system also including a land-based communication network, which does not have the just mentioned drawback.

According to the invention, transmission of control information between two earth stations communicating by means of a satellite link is at least partly insured by means of a link of the land-based communication network for at least control information related to the co-ordinated use of the satellite link between earth stations.

According to the invention, the arrangement for exchanging control information between earth stations of a satellite communication network linked with a land-based communication network in a communication system, comprises at least an earth station including a station controller programmed for transmitting control information to at least one other earth station by means of a satellite link or by means of a land-based link, such a station controller being linked to a satellite interface of its earth station by means of a first transceiving equipment and to a land communication interface connected to the land based link by means of another transceiving equipment.

The invention will now be described further with reference to the accompanying drawings, in which:
Figure 1 is a schematic diagram of an arrangement for exchanging control data between earth stations of a satellite communication network in a communication system according to the invention;
Figure 2 is a schematic diagram of a communication satellite; and
Figure 3 is a schematic diagram of an earth station.

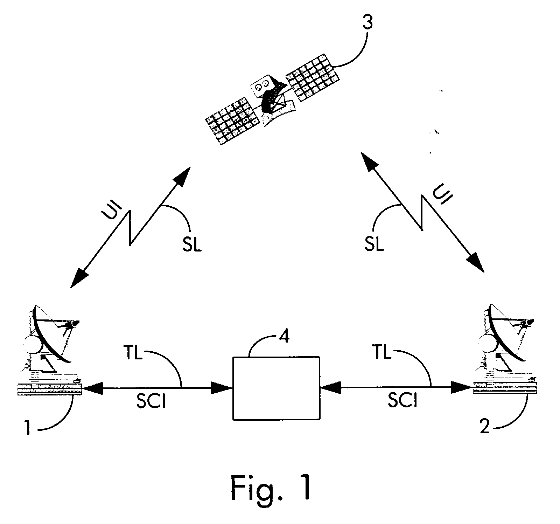

Referring to figure 1, there is shown two earth stations 1, 2 of a satellite communication network and one orbiting communication satellite 3. As already known, the satellite communication network may comprise a constellation of satellites in near circular or possibly elliptical orbits and geographically scattered earth stations. At least some of the earth stations are linked together by means of communication links TL of a land-based communication network and for instance communication links between a controller 4 and earth stations.

The earth stations transceive user information UI and control information SCI between themselves by means of satellite links SL and also by means of land-based links TL according to the invention.

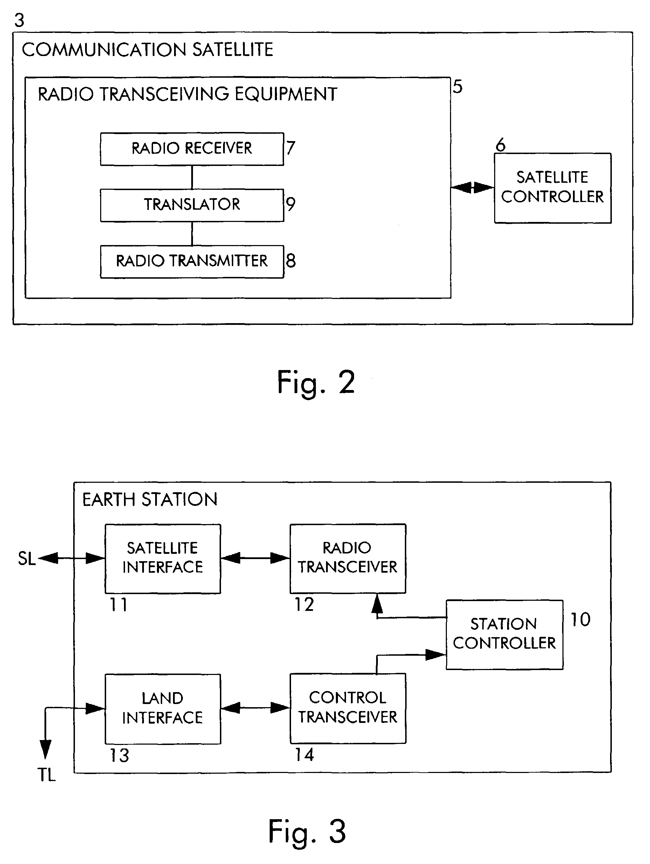

As illustrated on figure 2, each satellite of the communication network comprises a radio signal transceiving equipment 5 and a satellite controller 6. The radio signal transceiving equipment includes an uplink radiofrequency receiver 7, a downlink radiofrequency transmitter 8, both being linked together by means of a satellite communication translator 9 and possibly a satellite control uplink/downlink transceiver.

Each earth station 1 or 2 of the land-based network includes usual voice/data related equipment for communication with user terminals through a land-based network , for instance a telephone network, and with communication satellites under control of a station controller 10. These equipment and terminals are not shown here as long as they are not pad of the present invention.

For controlling purposes, the station controller 10 is linked in the earth station to a satellite communication interface 11, associated with a radio signal transceiving equipment 12 and also to a land-based communication interface 13 associated with a control information transceiving equipment 14.

A controlling entity is associated to the communication system, i.e. to the satellite communication network, by means of radio links and to the land-based communication network by wired links and/or radio links TL. Each earth station is linked to at least one of the control units 4 of the control entity. Some earth stations are linked together at the level of at least a control unit 4 by means of links TL of the land-based communication network between control units and earth stations.

Uplink signals sent to a satellite from the earth stations through their radio transceiving equipment are received through the uplink radiofrequency receiver 7 in the satellite. They are applied to the satellite communication translator 9 where they are translated from the uplink frequency to a downlink frequency. The translated signals are applied to the communications downlink radiofrequency transmitter 8 of the satellite where they are amplified and transmitted to the ground by an antenna.

The voice and/or data signals relating to individual connections which are sent in a same direction are combined and transmitted to the radio signal transmitting equipment associated to the satellite interface in a first station, e. g. 1. They are initially received by transceiving units of this first earth station, usually through the links of a telephone system and from wired or wireless terminals. As indicated above, they are supposed sent to a same geographical area attended by a same other earth station. The radio signal which is obtained is sent to the addressee earth station, e. g. 2, through a satellite 3 as indicated above. The corresponding radio signal received from this satellite 3 through the radio signal receiving equipment of the addressee earth station is processed to be divided into voice and/or data flows corresponding each to an individual connection. The signals corresponding to these flows are handled by voice/data receiving units of the land-based communication interface in the addressee earth station for further transmission to the respective addressee users through a pad of land-based network associated to the addressee earth station.

As indicated above, radiocommunication of voice and/or data between earth stations through a communication satellite implies communications of control information between the stations.

According to the invention, at least some control communications are established by means of a convenient land-based link TL. They are for instance control information related to the co-ordinated use of the satellite link between earth stations. Such communications includes more particularly time-sensitive control communications between two earth stations.

User information is exchanged between the earth stations by means of satellite links. It is often associated with some corresponding controls, as soon as such controls exchanged between two earth stations does not interfere significantly with the transmission rate performance of the satellite link uniting the two earth stations.

Time-sensitive control information corresponds for instance to medium access control information, such as for instance requests initiated by an earth station for an acknowledgement or receipt from another earth station when they are communicating together through a shared satellite link. As known such a control information is considered as time-sensitive when it delays further transmission in one way over the satellite link till the acknowledgement or receipt is received.

According to the invention, at least some control information, for instance status and control information and particularly medium access control information, exchanged by two earth stations communicating user information by means of a satellite link are exchanged by means of a link uniting these two earth stations in the land-based network.

For this purpose, an earth station requires a land-based communication interface 13 which is different or modified to allow transmission of status and control information to another earth station by means of a land-based communication link TL. The station-controller 10 of such an earth station is programmed in order to transmit control information to other earth stations either by means of a satellite link SL or by means of a land-based link TL, according to each other station, knowing that there is not necessarily a convenient land-based link with every other station.

In an example of realisation of the controlling arrangement according to the invention, the station-controller 10 of an earth station according to this invention is linked to a satellite interface 11 of the station by means of a first transceiving equipment 12 and also to a land-based communication interface 13 by means of a second transceiving equipment 14. for exchanging control information. The exchange is obtained either through a satellite link with another earth station when only linked to such a station by means of a satellite link SL. Otherwise the exchange is obtained through a land-based link as soon as there is a convenient one.

The station-controller 10 of an earth station controls for instance transmission of user information via the first transceiving equipment 12 and the associated satellite interface 11 and transmission of status and control information via the second transceiving equipment 14 and the associated land-based communication interface 13. This land-based communication interface corresponds for instance to a twisted pair telephone line interface of a telephone network which is the land-based communication network.

Besides more efficiently using the satellite links of a communication system including a satellite network and an earth based network, the invention also introduces a reduction of the required on-board satellite functionality, when there is no need for processing some control information which are transmitted by earth based links between earth stations linked together by means of a satellite link.

## Claims

1. Method for exchanging control information between earth stations (1, 2) of a satellite communication network linked with a land-based communication network in a communication system,
CHARACTERISED IN THAT transmission of control information between two earth stations (1, 2) communicating by means of a satellite link (SL) is at least partly insured by means of a link (TL) of the land-based communication network for at least control information related to the co-ordinated use of the satellite link by the earth stations (1, 2).

2. Arrangement for exchanging control information between earth stations (1, 2) of a satellite communication network linked with a land-based communication network in a communication system,
CHARACTERISED IN THAT in at least an earth station there is a station controller (10) programmed for transmitting control information related to the co-ordinated use of a satellite link (SL), to at least one other earth station by means of a satellite link (SL) or by means of a land-based link (TL) such a station controller being linked to a satellite interface (11) of its earth station by means of a first transceiving equipment (12) and to a land communication interface (13) connected to the land based link (TL) by means of another transceiving equipment (14).

3. Arrangement according to claim 2,
CHARACTERISED IN THAT it comprises at least an earth station with a station controller including means for transmitting user information, via the first transceiving equipment (12) and the associated satellite interface (11) of the station and for transmitting status and control information via the second transceiving equipment (14) and the associated land-based communication interface (13).
